# EUROPEAN PATENT APPLICATION

(11) **EP 4 844 203 A1**
(43) Date of publication of application: **25.11.2026**
(21) Application number: 24931893.2
(22) Date of filing: 05.12.2024
(51) Int. Cl.: F01N 3/28, B32B 5/02

(54) **MAT MATERIAL AND HOLDING SEAL MATERIAL**

(30) Priority: 28.03.2024 JP 2024053411
(71) Applicant: IBIDEN CO., LTD., Ogaki-shi, Gifu 503-8604 (JP)
(72) Inventor: MAEDA, Toshiyuki, Takahama-shi, Aichi 444-1301 (JP)
(74) Representative: Winter, Brandl - Partnerschaft mbB
(86) International application number: PCT/JP2024/043053
(87) International publication number: WO 2025/203889

(57) **Abstract**

Provided is a mat material including a stacked mat, the stacked mat including an oriented layer including inorganic fibers that are oriented in the same direction and a random layer including inorganic fibers that are randomly oriented, wherein the stacked mat contains a binder.

## Description

### TECHNICAL FIELD

The present invention relates to a mat material and a holding sealing material.

### BACKGROUND ART

The exhaust gas discharged from internal combustion engines (e.g., diesel engines) contains particulate matter (hereinafter also referred to as "PM"). Adverse effects of PM on the environment and human bodies have been problems in recent years. The exhaust gas also contains harmful gas components such as CO, HC, and NOx, which creates concerns about the impact of such harmful gas components on the environment and human bodies.

Accordingly, various exhaust gas purification apparatuses that collect PM contained in the exhaust gas or purify harmful gas components have been proposed. Such an exhaust gas purification apparatus includes an exhaust gas treatment body formed of a porous ceramic material such as silicon carbide or cordierite, a metal casing that houses the exhaust gas treatment body, and a holding sealing material (mat material) disposed between the exhaust gas treatment body and the metal casing. The holding sealing material (mat material) is arranged mainly to prevent the exhaust gas treatment body from being damaged due to contact with the metal casing covering its periphery as a result of vibrations or impacts generated during vehicle operation, and to prevent exhaust gas from leaking through a space between the exhaust gas treatment body and the metal casing.

As a mat material used for such applications, Patent Literature 1 discloses a holding sealing material including a mat having a predetermined thickness, wherein the mat contains inorganic fibers having a surface coated with a binder layer, the binder layer contains an organic binder and an inorganic binder, and when the mat is trisected in a thickness direction into a first surface portion, a middle portion, and a second surface portion, the amount of the organic binder attached to the first surface portion is more than the amount of the organic binder attached to the middle portion and is also more than the amount of the organic binder attached to the second surface portion.

### CITATION LIST

### PATENT LITERATURE

Patent Literature 1: JP 2015-63925 A

### SUMMARY OF INVENTION

### TECHNICAL PROBLEM

When a mat material is wrapped around an exhaust gas treatment body, the wrapping is sometimes performed while a tensile load is applied to the mat material.
In the wrapping, if the tensile strength of the mat material is low, the mat material may undesirably break due to the tensile load.

The mat material described in Patent Literature 1 also has insufficient tensile strength, and thus requires improvement in tensile strength.

The present invention has been made in view of such problems and aims to provide a mat material having high tensile strength.

### SOLUTION TO PROBLEM

The mat material of the present invention relates to a mat material including a stacked mat that includes an oriented layer including inorganic fibers that are oriented in the same direction and a random layer including inorganic fibers that are randomly oriented. The stacked mat contains a binder.

The stacked mat constituting the mat material of the present invention includes an oriented layer and a random layer. The presence of an oriented layer can impart resistance to elongation and high tensile strength to the mat material.

Also, a random layer is readily impregnated with a binder. Incorporating a binder into the mat material can increase the frictional force at a surface of the mat material.

Preferably, in the mat material of the present invention, the oriented layer and the random layer are alternately stacked in a thickness direction of the stacked mat, and each of two outermost layers of the stacked mat is the random layer.

When the stacked mat is impregnated with a binder, the binder is allowed to permeate into the stacked mat in the thickness direction from the random layer defining an outermost layer of the stacked mat. The binder readily permeates into a random layer but does not readily permeate into an oriented layer. Thus, the binder is blocked by an oriented layer in a thickness direction of the stacked mat.

As a result, of the outermost layers of the stacked mat, the outermost layer that is in contact with a binder solution for binder impregnation has a high binder content. A higher binder content increases the frictional force. Thus, when the mat material is wrapped around an exhaust gas treatment body, the outermost layer having a higher binder content is used as a surface contacting the exhaust gas treatment body, the surface requiring a high frictional force. Thereby, displacement between the exhaust gas treatment body and the mat material can be prevented, and the mat material can be preferably used.

Preferably, in the mat material of the present invention, the stacked mat contains at least one of an organic binder or an inorganic binder.

Preferably, in the mat material of the present invention, when the stacked mat is trisected in the thickness direction into a first surface portion, a middle portion, and a second surface portion, an outermost layer of the first surface portion is the random layer, and a binder content of the first surface portion is higher than a binder content of the middle portion and higher than a binder content of the second surface portion.

In the mat material, the binder content of the first surface portion is high. Thus, when the first surface portion is used as a portion that comes into contact with the exhaust gas treatment body, displacement between the exhaust gas treatment body and the mat material is prevented, and the mat material can be preferably used.

Although the mat material is used inside an exhaust gas purification apparatus, the exhaust gas purification apparatus operates in a high-temperature environment, and the binder (particularly, an organic binder) may volatilize. Therefore, the binder content is required not to be high in a mat material that is intended to be used inside the exhaust gas purification apparatus.

In the mat material, the binder content of the first surface portion is high, but the binder content of the mat material as a whole is not high. Therefore, the requirements regarding the binder content of the mat material as a whole can be satisfied.

In the mat material of the present invention, the binder contents preferably satisfy the following relationships:
0.4 ≤ (middle portion/first surface portion);
0.2 ≤ (second surface portion/first surface portion); and
(second surface portion/middle portion) ≤ 0.5.

In addition, the binder contents preferably further satisfy the following relationship:
0 < (second surface portion/middle portion).

In the case where the binder contents of the first surface portion, the middle portion, and the second surface portion satisfy the above-described relationships, when the mat material is wrapped around an exhaust gas treatment body such that the first surface portion is in contact with the exhaust gas treatment body, the frictional force between the mat material and the exhaust gas treatment body increases, and interfacial slippage between the mat material and the exhaust gas treatment body is less likely to occur during assembly into a casing.

Preferably, in the mat material of the present invention, 70% or more of the inorganic fibers in the oriented layer have an inclination of 60 to 90 degrees relative to a width direction of the mat material.

The mat material of the present invention preferably has a tensile strength at break of 200 kPa or more, as measured by a tensile test.

The mat material preferably has an elongation at break of 3.5 mm or less, as measured by a tensile test.

When the tensile strength at break and the elongation at break measured by a tensile test are within the above-described ranges, the mat material can be more reliably prevented from breaking while being wrapped around an exhaust gas treatment body or the like.

In addition, a high tensile strength at break and a small elongation at break reduce variations in wrapping workability.

The holding sealing material of the present invention includes the mat material of the present invention and is for use in holding an exhaust gas treatment body in an exhaust gas purification apparatus.

Since the mat material of the present invention is resistant to elongation and has high tensile strength, the mat material is resistant to breakage when wrapped around an exhaust gas treatment body, and the mat material is suitable for use as a holding sealing material.

### BRIEF DESCRIPTION OF DRAWINGS

FIG. 1 is a schematic perspective view illustrating an example of a mat material.
FIG. 2 is a cross-sectional view taken along line A-A of the mat material shown in FIG. 1.
FIG. 3 is a schematic perspective view illustrating an example of an oriented layer.
FIG. 4 is an example of a micrograph including inorganic fibers.
FIG. 5 is a schematic perspective view illustrating an example of a random layer.
FIG. 6 is a schematic cross-sectional view illustrating a needle mat including rivet portions.
FIG. 7 is a schematic cross-sectional view illustrating an example of an exhaust gas purification apparatus.
FIG. 8 is a schematic perspective view illustrating an example of an exhaust gas treatment body constituting an exhaust gas purification apparatus.
FIG. 9 is a schematic perspective view illustrating an example of a method for producing an exhaust gas purification apparatus.

### DESCRIPTION OF EMBODIMENTS

Hereinafter, examples of the mat material and the holding sealing material of the present invention will be described in detail with reference to the drawings.

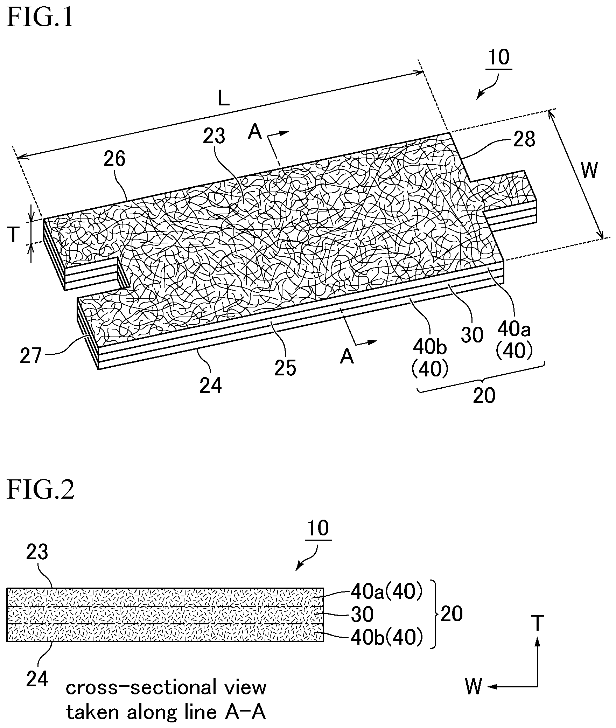

FIG. 1 is a schematic perspective view illustrating an example of a mat material.

FIG. 2 is a cross-sectional view taken along line A-A of the mat material shown in FIG. 1.

A mat material 10 shown in FIG. 1 is a stacked mat 20 including an oriented layer 30 and random layers 40.

Three layers, namely a random layer 40a, the oriented layer 30, and a random layer 40b, are stacked in a thickness direction of the stacked mat 20 (the direction indicated by the double-headed arrow T in FIGS. 1 and 2). The random layer 40a and the random layer 40b have the same specifications.

The stacked mat 20 is long in its longitudinal direction (the direction indicated by the double-headed arrow L in FIG. 1).

The stacked mat 20 has two main surfaces, namely a first main surface 23 and a second main surface 24. The first main surface 23 is a surface of the random layer 40a, and the second main surface 24 is a surface of the random layer 40b.

The stacked mat 20 has four side surfaces. Side surfaces along the longitudinal direction of the stacked mat 20 are a first long side surface 25 and a second long side surface 26. Side surfaces along the width direction of the stacked mat 20 (the direction indicated by the double-headed arrow W in FIG. 1) are a first short side surface 27 and a second short side surface 28.

The stacked mat 20 has a substantially rectangular shape in plan view, and the first short side surface 27 has a recess formed thereon, and the second short side surface 28 has a projection formed thereon. The recess and the projection have shapes that perfectly fit each other when the mat material is wrapped around a product having a cylindrical periphery, such as an exhaust gas purification apparatus, an exhaust gas treatment body, or an exhaust pipe.

In the mat material of the present embodiment, the shapes of the fitting portions are described as a recess and a projection. The shapes of the fitting portions may alternatively be a combination of L-shaped portions.

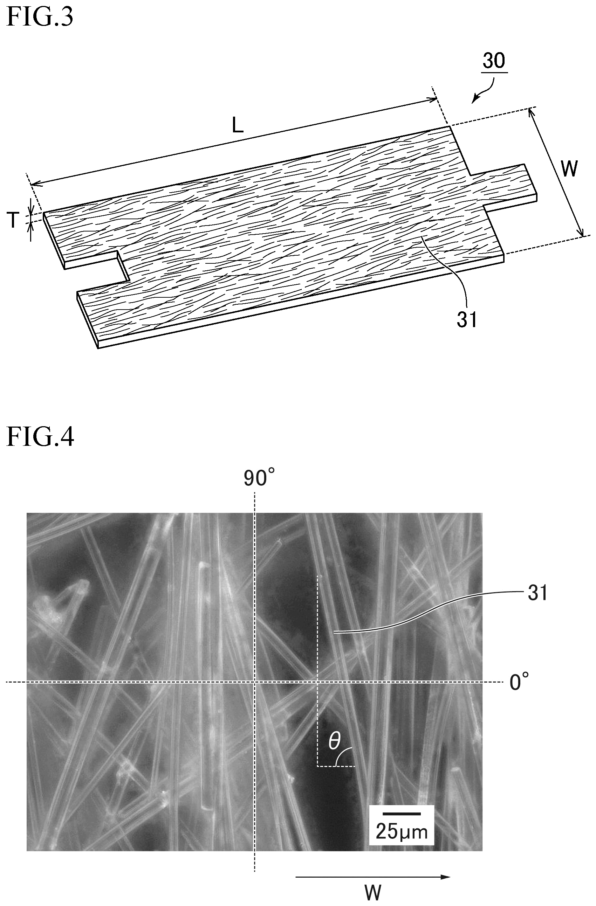

FIG. 3 is a schematic perspective view illustrating an example of an oriented layer.

FIG. 3 shows the oriented layer 30 and schematically illustrates inorganic fibers 31 constituting the oriented layer 30 and their orientation directions. The oriented layer 30 is a layer including inorganic fibers that are oriented in the same direction.

In the oriented layer, the inorganic fibers are preferably oriented in the same direction along a main surface of the mat material (the LW plane direction in FIG. 3). The inorganic fibers are also preferably oriented in the longitudinal direction of the mat material (the L direction in FIG. 3) or in the width direction of the mat material (the W direction in FIG. 3).

In the oriented layer shown in FIG. 3, the inorganic fibers are oriented in the longitudinal direction of the mat material.

Herein, the phrase "the inorganic fibers are oriented in the same direction" means that, when the angles of the inorganic fibers are measured relative to a certain direction of an imaging region (typically, the horizontal direction of the imaging region) in a micrograph including the inorganic fibers, 50% or more of the fibers by number have an angle ranging from 75 to 90 degrees.

FIG. 4 is an example of a micrograph including inorganic fibers.

The inorganic fibers 31 are shown in the photograph in FIG. 4. As can be seen in FIG. 4, many of the inorganic fibers are oriented in the vertical direction of the imaging region (the 90° direction). In addition, 52% of the inorganic fibers have an angle θ ranging from 75 to 90 degrees, measured relative to the horizontal direction of the imaging region (the 0° direction).

In other words, the layer shown in the photograph in FIG. 4 is an oriented layer.

Preferably, 70% or more of the inorganic fibers in the oriented layer have an inclination of 60 to 90 degrees relative to a width direction of the mat material.

The oriented layer preferably satisfies the above-described condition because the orientation of the inorganic fibers is aligned with the direction in which tensile stress is applied during wrapping of the mat material, and therefore the tensile strength of the mat material tends to increase.

The horizontal direction of the photograph shown in FIG. 4 corresponds to the width direction of the mat material, and 78% of the inorganic fibers have an angle θ ranging from 60 to 90 degrees.

In other words, in the oriented layer shown in the photograph in FIG. 4, 70% or more of the inorganic fibers have an inclination of 60 to 90 degrees relative to the width direction of the mat material.

A direction inclined at an angle of 60 to 90 degrees relative to the width direction of the mat material can be regarded as a direction along the longitudinal direction of the mat material. Therefore, the inorganic fibers in the oriented layer can be regarded as being oriented in the longitudinal direction of the mat material.

In the oriented layer, the proportion of inorganic fibers having an angle θ ranging from 75 to 90 degrees, measured relative to the horizontal direction of the imaging region (the 0° direction), may be 60% or more or 70% or more. The proportion of inorganic fibers having an angle θ ranging from 75 to 90 degrees may also be 90% or less or 80% or less.

In the oriented layer, 75% or more or 85% or more of the inorganic fibers may have an inclination of 60 to 90 degrees relative to the width direction of the mat material. Also, 95% or less or 90% or less of the inorganic fibers may have an inclination of 60 to 90 degrees relative to the width direction of the mat material.

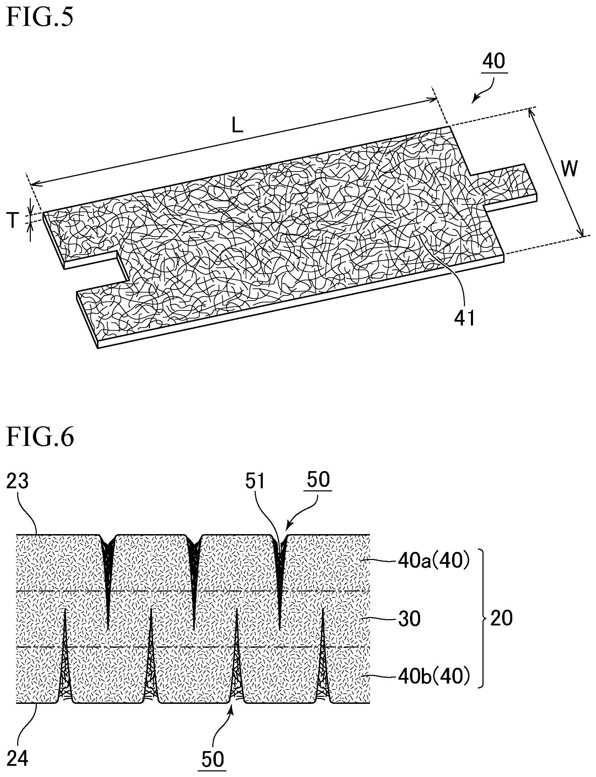

FIG. 5 is a schematic perspective view illustrating an example of a random layer.

FIG. 5 shows the random layer 40 and schematically illustrates inorganic fibers 41 constituting the random layer 40.

The random layer 40 is a layer including inorganic fibers that are randomly oriented.

Herein, the phrase "the inorganic fibers are randomly oriented" means that, in a micrograph including the inorganic fibers, it can be seen that the inorganic fibers are not oriented in a particular direction within the imaging region. A layer in which the orientation of the inorganic fibers does not meet the above-described definition of the oriented layer may be regarded as a random layer.

In the stacked mat, the oriented layer and the random layer are preferably alternately disposed in the thickness direction of the stacked mat. In FIGS. 1 and 2, the random layer 40a, the oriented layer 30, and the random layer 40b are alternately disposed in this order, with each of two outermost layers of the stacked mat being the random layer.

The number of mats stacked in the stacked mat is not limited as long as the stacked mat includes at least one oriented layer and at least one random layer. Since each of the outermost layers is preferably the random layer, and the random layer and the oriented layer are preferably alternately disposed, the number of layers is preferably three or five. Examples include a three-layer structure of random layer/oriented layer/random layer and a five-layer structure of random layer/oriented layer/random layer/oriented layer/random layer.

The mats constituting the stacked mat each contain inorganic fibers. Any inorganic fibers, such as alumina fibers or silica fibers, may be used. Glass fibers or biosoluble fibers may also be used. Fibers may be selected depending on, for example, properties required for the mat material, such as heat resistance and wind erosionresistance. Use of large-diameter fibers and long fibers compatible with countryspecific environmental regulations is preferred.

Of these, inorganic fibers including low-crystalline alumina are preferred, and inorganic fibers including low-crystalline alumina having a mullite composition are more preferred. In addition, inorganic fibers including spinel-type compounds are still more preferred.

In the mat material of the present invention, the stacked mat contains a binder.

Incorporating a binder into the mat material can increase the frictional force at a surface of the mat material. Since the random layer is readily impregnated with a binder, the random layer is preferably impregnated with a binder.

The stacked mat preferably contains at least one of an organic binder or an inorganic binder.

Incorporating a binder into the stacked mat can increase the frictional force of the mat material.

Examples of the organic binder include rubber-based resins, styrene-based resins, silicone-based resins, acrylic resins, polyester-based resins, and polyurethane resins.

Examples of the inorganic binder include inorganic sol dispersions (such as alumina sol, silica sol, zirconia sol, and titania sol).

The binder is preferably incorporated into the stacked mat such that the binder content (the total content of the organic binder and the inorganic binder) is 0.2 wt% or higher and 30 wt% or lower relative to the weight of the stacked mat. When an organic binder is contained, the organic binder content is preferably 0.1 wt% or higher and 20 wt% or lower, and when an inorganic binder is contained, the inorganic binder content is preferably 0.1 wt% or higher and 10 wt% or lower.

Preferably, when the stacked mat contains a binder, the outermost layers of the stacked mat are each a random layer, and an oriented layer is disposed inward of the random layer.

When the stacked mat is impregnated with a binder, the binder is allowed to permeate into the stacked mat in the thickness direction from the random layer defining an outermost layer of the stacked mat. The binder readily permeates into a random layer but does not readily permeate into an oriented layer. Thus, the binder is blocked by an oriented layer in a thickness direction of the stacked mat.

As a result, of the outermost layers of the stacked mat, the outermost layer that is in contact with a binder solution for binder impregnation has a high binder content. A higher binder content increases the frictional force. Thus, when the mat material is wrapped around an exhaust gas treatment body, the outermost layer having a higher binder content is used as a surface contacting the exhaust gas treatment body, the surface requiring a high frictional force. Thereby, displacement between the exhaust gas treatment body and the mat material can be prevented, and the mat material can be preferably used.

A preferred specific example of a configuration in which the outermost layers of the stacked mat are each a random layer and an oriented layer is disposed inward of the random layer is a configuration in which an oriented layer(s) and random layers are alternately stacked in the thickness direction and the two outermost layers of the stacked mat are each a random layer.

Preferably, when the stacked mat is trisected in the thickness direction into a first surface portion, a middle portion, and a second surface portion, an outermost layer of the first surface portion is a random layer, and a binder content of the first surface portion is higher than a binder content of the middle portion and higher than a binder content of the second surface portion.

In the stacked mat 20 shown in the cross-sectional view of FIG. 2, the random layer 40a, the oriented layer 30, and the random layer 40b have the same thickness, and the random layer 40a can be regarded as the first surface portion, the oriented layer 30 as the middle portion, and the random layer 40b as the second surface portion. In this case, preferably, the binder content of the random layer 40a is higher than the binder content of the oriented layer 30 and higher than the binder content of the random layer 40b.

In the mat material in which an outermost layer of the first surface portion is a random layer, the binder content of the first surface portion is high. Thus, when the first surface portion is used as a portion that comes into contact with the exhaust gas treatment body, displacement between the exhaust gas treatment body and the mat material is prevented, and the mat material can be preferably used.

Although the mat material is used inside an exhaust gas purification apparatus, the exhaust gas purification apparatus operates in a high-temperature environment, and the binder (particularly, an organic binder) may volatilize. Therefore, the binder content is required not to be high in a mat material that is intended to be used inside the exhaust gas purification apparatus.

In the mat material having the above-described configuration, the binder content of the first surface portion is high, but the binder content of the mat material as a whole is not high. Therefore, the requirements regarding the binder content of the mat material as a whole can be satisfied.

Preferably, the binder contents satisfy the following relationships:
0.4 ≤ (middle portion/first surface portion);
0.2 ≤ (second surface portion/first surface portion); and
(second surface portion/middle portion) ≤ 0.5.

Further, preferably, the binder contents satisfy the following relationship:
0 < (second surface portion/middle portion).

In the case where the binder contents of the first surface portion, the middle portion, and the second surface portion satisfy the above-described relationships, when the mat material is wrapped around an exhaust gas treatment body such that the first surface portion is in contact with the exhaust gas treatment body, the frictional force between the mat material and the exhaust gas treatment body increases, and interfacial slippage between the mat material and the exhaust gas treatment body is less likely to occur during assembly into a casing.

Preferably, the binder content of the first surface portion is 0.1 wt% or higher and 29.0 wt% or lower, the binder content of the middle portion is 0.2 wt% or higher and 15.0 wt% or lower, and the binder content of the second surface portion is 0.05 wt% or higher and 5.0 wt% or lower.

The mat material of the present invention preferably has a tensile strength at break of 200 kPa or more, as measured by a tensile test.

The mat material preferably has an elongation at break of 3.5 mm or less, as measured by a tensile test.

The tensile strength at break and the elongation at break are measured using a sample prepared by cutting the mat material to a length of 200 mm in the longitudinal direction of the mat material and a width of 50 mm in the width direction of the mat material.

The thickness of the sample is measured at three locations. Using a universal material testing machine equipped with chucks (gripping jigs) for tensile testing, the mat material is pulled in the longitudinal direction of the sample at a speed of 100 mm/min, with a gripping length of 40 mm at each side, and the load at break and the tensile distance at break are determined. 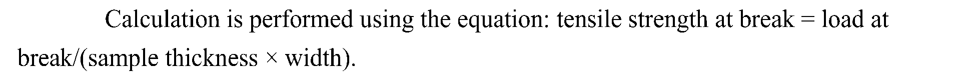 Calculation is performed using the equation: tensile strength at break = load at break/(sample thickness × width).

The tensile distance at break is defined as the elongation at break.

When the tensile strength at break and the elongation at break measured by a tensile test are within the above-described ranges, the mat material can be more reliably prevented from breaking while being wrapped around an exhaust gas treatment body or the like.

In addition, a high tensile strength at break and a small elongation at break reduce variations in wrapping workability.

An oriented layer and a random layer constituting the stacked mat may be papermaking mats obtained by a papermaking method or needle mats obtained by a needling method.

In the case of a papermaking method, for example, inorganic fibers such as alumina fibers or silica fibers, an inorganic binder, and water are mixed such that the amount of the inorganic fibers in the raw material solution reaches a predetermined value, followed by stirring with a stirrer. Thus, a slurry containing the inorganic fibers is prepared. The slurry may optionally contain a colloidal solution of a high molecular compound or resin. Subsequently, the liquid mixture is poured into a forming vessel having a filtration mesh formed on its bottom, and the water in the liquid mixture is removed through the mesh. Thus, a raw material sheet is produced. Then, the raw material sheet is thermally compressed under predetermined conditions. Thus, a papermaking mat can be obtained.

In the case of a needling method, for example, a spinning mixture containing an aqueous basic aluminum chloride solution, silica sol, and the like as raw materials is spun by a blowing method to prepare an inorganic fiber precursor having an average fiber diameter of 3 to 10 µm. Subsequently, the inorganic fiber precursor is compressed to form a continuous sheet-shaped product having a predetermined size, which is then subjected to a needling treatment (needle punching treatment), followed by firing. Thus, a needle mat can be obtained.

The oriented layer and the random layer may be produced by any method and may be produced by the following method, for example.

When the oriented layer is produced by a papermaking method, a slurry containing inorganic fibers is caused to flow in a certain direction during papermaking, whereby the fibers are oriented in the flow direction. Thus, the oriented layer can be obtained.

When the random layer is produced by a papermaking method, a slurry containing inorganic fibers is poured into a mold from above. Since the slurry does not flow, the fibers are not oriented in a particular direction, and the random layer is formed.

The slurry containing inorganic fibers may contain at least one of an organic binder or an inorganic binder.

Also, the stacked mat may be a papermaking mat prepared by needling a laminate of an oriented layer(s) and random layers.

A binder may be applied to the stacked mat. When a binder is applied to the stacked mat, a binder solution containing the binder is allowed to permeate into the stacked mat in the thickness direction from one main surface (defined as a first main surface) of the stacked mat.

The binder solution may be allowed to permeate into the stacked mat by a method in which the binder solution is dropped onto the mat by curtain coating or the like to apply the binder solution to the inorganic fibers in the mat, or by a method in which the binder solution is sprayed onto the mat by spray coating.

When each of the outermost layers of the stacked mat is a random layer, and an oriented layer is disposed inward thereof, the binder readily permeates into a random layer but does not readily permeate into an oriented layer. Thus, the binder is blocked by an oriented layer in a thickness direction of the stacked mat.

As a result, of the outermost layers of the stacked mat, the outermost layer that is in contact with a binder solution for binder impregnation has a high binder content. A higher binder content increases the frictional force. Thus, when the mat material is wrapped around an exhaust gas treatment body, the outermost layer having a higher binder content is used as a surface contacting the exhaust gas treatment body, the surface requiring a high frictional force. Thereby, displacement between the exhaust gas treatment body and the mat material can be prevented, and the mat material can be preferably used.

Preferably, the stacked mat is a needle mat that contains a binder and has a rivet portion extending in the thickness direction along a needle mark from the first main surface of the stacked mat and having a higher binder concentration than other portions.

FIG. 6 is a schematic cross-sectional view illustrating a needle mat including rivet portions.

FIG. 6 shows rivet portions 51 formed by impregnation of a binder into needle marks 50 formed by needling from the first main surface 23 of the stacked mat 20.

A needle mat having a rivet portion is preferred because the binder permeates further into the mat material in the thickness direction, thereby binding the inorganic fibers together and reinforcing the structure of the mat material.

The rivet portion is a portion in which a binder (organic binder) that has been charred by heating the mat material appears like a rivet in a cross section of the stacked mat.

The depth of the rivet portion is not limited.

FIG. 6 also shows a state in which the needle marks 50 are present on the second main surface 24 of the stacked mat 20, but no rivet portion is present because the binder has not permeated into the needle marks 50 from the second main surface 24.

The mat material of the present invention can be used as a holding sealing material for holding an exhaust gas treatment body in an exhaust gas purification apparatus.

The holding sealing material of the present invention includes the mat material of the present invention and is for use in holding an exhaust gas treatment body in an exhaust gas purification apparatus.

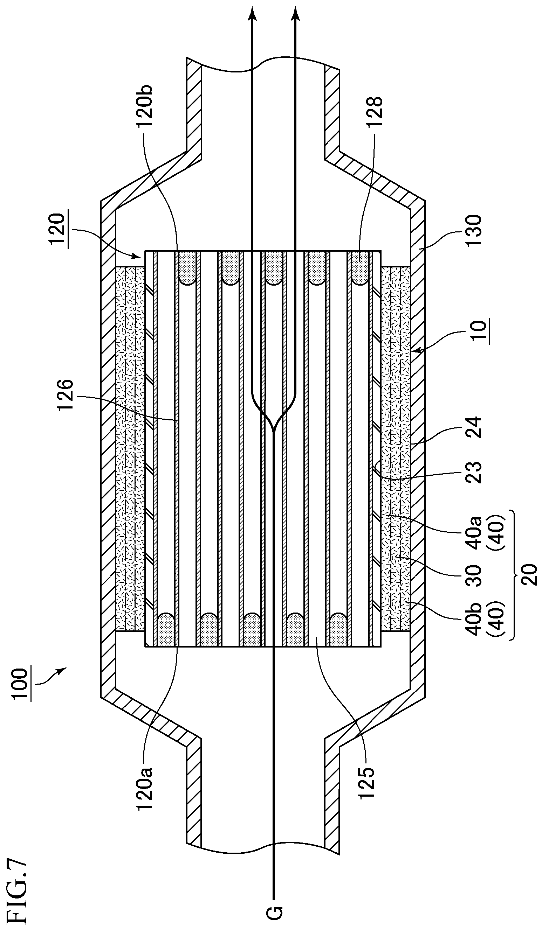

FIG. 7 is a schematic cross-sectional view illustrating an example of an exhaust gas purification apparatus.

As shown in FIG. 7, an exhaust gas purification apparatus 100 includes a metal casing 130, an exhaust gas treatment body 120 housed in the metal casing 130, and the mat material 10 serving as a holding sealing material, disposed between the exhaust gas treatment body 120 and the metal casing 130.

The exhaust gas treatment body 120 has a columnar body in which a plurality of cells 125 are arranged in parallel in the longitudinal direction, with cell walls 126 interposed therebetween. If necessary, an inlet tube for introducing exhaust gas discharged from an internal combustion engine and an outlet tube for discharging the exhaust gas that has passed through the exhaust gas purification apparatus are connected to ends of the casing 130.

Passage of exhaust gas through the exhaust gas purification apparatus 100 having the above-described configuration is described below with reference to FIG. 7.

As shown in FIG. 7, the exhaust gas that has been discharged from the internal combustion engine and that has flowed into the exhaust gas purification apparatus 100 (in FIG. 7, the exhaust gas is denoted by G, and the exhaust gas flow is indicated by arrows) flows into one of the cells 125 open at an exhaust gas inlet-side end 120a of the exhaust gas treatment body (honeycomb filter) 120, and then passes through the cell wall 126 between the cells 125. At this point, PM in the exhaust gas is collected by the cell wall 126, and the exhaust gas is purified. The purified exhaust gas flows out from another cell 125 open at an exhaust gas discharge-side end 120b and is discharged to the outside.

In the exhaust gas purification apparatus 100 shown in FIG. 7, the holding sealing material is the mat material 10 of the present invention, the first main surface 23 of the stacked mat constituting the mat material 10 is disposed adjacent to the exhaust gas treatment body 120, and the second main surface 24 is disposed adjacent to the metal casing 130.

Any heat-resistant metal can be used as a material of the metal casing constituting the exhaust gas purification apparatus. Specific examples include metals such as stainless steel, aluminum, and iron.

Suitable shapes of the casing include a substantially cylindrical shape, a clamshell shape, a shape with a substantially elliptical cross-section, and a shape with a substantially polygonal cross-section.

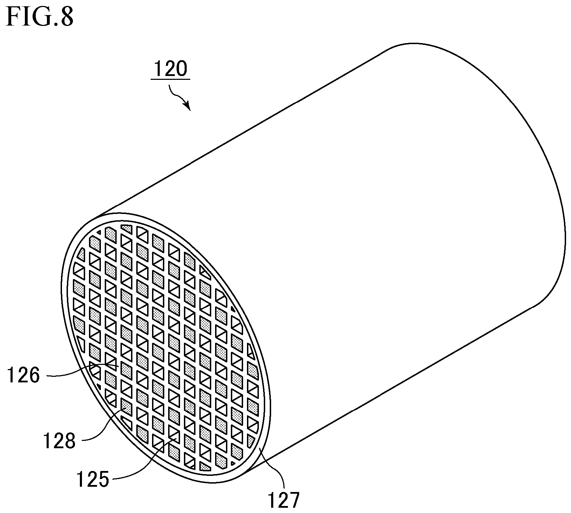

FIG. 8 is a schematic perspective view illustrating an example of an exhaust gas treatment body constituting the exhaust gas purification apparatus.

The exhaust gas treatment body 120 shown in FIG. 8 is a columnar ceramic honeycomb structured body in which a plurality of cells 125 are arranged in parallel in the longitudinal direction, with the cell walls 126 interposed therebetween. One of the ends of each cell 125 is plugged with a plug material 128. In addition, a peripheral coat layer 127 is provided on the periphery of the honeycomb structured body in order to reinforce the periphery of the honeycomb structured body, adjust the shape of the honeycomb structured body, and improve thermal insulating properties of the honeycomb structured body.

In the case where each cell 125 is plugged at one end, the end-plugged cells and unplugged cells are preferably alternately arranged when the exhaust gas treatment body 120 is viewed from one of the ends.

The cross-sectional shape of the exhaust gas treatment body 120 taken in a direction perpendicular to the longitudinal direction may be, but not limited to, a substantially circular shape, a substantially elliptical shape, or a substantially polygonal shape such as a substantially triangular shape, a substantially quadrangular shape, a substantially pentagonal shape, or a substantially hexagonal shape.

The cross-sectional shape of each cell 125 constituting the exhaust gas treatment body 120 may be a substantially polygonal shape such as a substantially triangular shape, a substantially quadrangular shape, a substantially pentagonal shape, or a substantially hexagonal shape, a substantially circular shape, or a substantially elliptical shape. The exhaust gas treatment body 120 may include a combination of cells having different cross-sectional shapes.

The exhaust gas treatment body 120 may be made of any material. Non-oxide materials such as silicon carbide and silicon nitride, and oxide materials such as cordierite and aluminum titanate can be used. Of these, in particular, porous fired bodies made of non-oxide materials such as silicon carbide and silicon nitride are preferred.

Such porous fired bodies are brittle materials and thus susceptible to breakage due to mechanical shock or the like. When the mat material 10 (holding sealing material) is disposed around the lateral surface of the exhaust gas treatment body 120, the mat material 10 absorbs shock. Thus, the exhaust gas treatment body 120 can be prevented from cracking or the like resulting from mechanical shock and thermal shock.

The exhaust gas treatment body may support a catalyst for purifying exhaust gas. Preferred examples of catalysts to be supported include noble metals such as platinum, palladium, and rhodium. Of these, platinum is more preferred. Other catalysts that can be used include alkali metals such as potassium and sodium, and alkaline-earth metals such as barium. Each of these catalysts may be used alone or two or more of these may be used in combination. These catalysts, when supported, facilitate removal of PM by combustion and allow purification of toxic exhaust gas.

The exhaust gas treatment body constituting the exhaust gas purification apparatus may be an integrally formed monolithic honeycomb structured body made of cordierite or the like. Alternatively, the exhaust gas treatment body may be an assembled honeycomb structured body formed by binding together a plurality of columnar fired honeycomb bodies made of silicon carbide or the like, via a paste mainly containing ceramic, each honeycomb fired body having a plurality of through holes arranged in parallel in the longitudinal direction with partition walls interposed therebetween.

In the exhaust gas treatment body constituting the exhaust gas purification apparatus, each cell may not be provided with a plug material and thus may not be plugged at ends. In this case, when supporting a catalyst such as platinum, the exhaust gas treatment body functions as a catalyst support for purifying harmful gas components such as CO, HC, and NOx contained in the exhaust gas.

The holding sealing material of the present invention including the mat material of the present invention is used by being wrapped around an exhaust gas treatment body. An example of the arrangement of a wound body obtained by wrapping the holding sealing material around an exhaust gas treatment body in an exhaust gas purification apparatus is described.

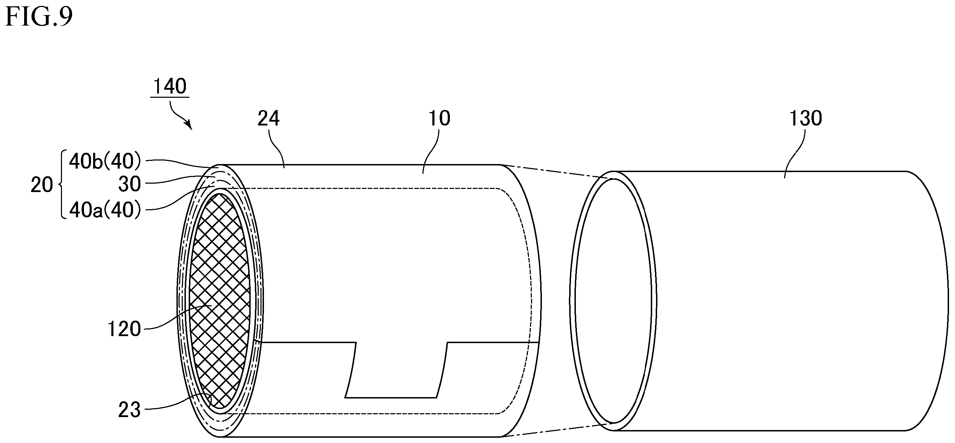

FIG. 9 is a schematic perspective view illustrating an example of a method for producing an exhaust gas purification apparatus.

As shown in FIG. 9, the holding sealing material including the mat material 10 is wrapped around the exhaust gas treatment body 120 to form a wound body 140. Then, the wound body 140 is housed in the metal casing 130, thereby producing an exhaust gas purification apparatus.

When the wound body 140 is produced, the mat material 10 is wrapped around the exhaust gas treatment body 120 such that the first main surface 23 of the stacked mat 20 constituting the mat material 10 faces the exhaust gas treatment body 120. As a result, the first main surface 23 faces the exhaust gas treatment body 120, and the second main surface 24 faces the metal casing 130.

Examples of methods for housing the wound body 140 in the metal casing 130 include: a press-fit method (stuffing method) in which the exhaust gas treatment body 120 (wound body 140) around which a holding sealing material including the mat material 10 is disposed is press-fitted to a predetermined position inside the metal casing 130; a sizing method (swaging method) in which the metal casing 130 is compressed from the outside so as to reduce its inner diameter; and a clamshell method in which a metal casing configured to be separable into a first casing and a second casing is used, the wound body 140 is placed on the first casing, and the second casing is then placed thereover for sealing.

When the wound body is housed in the metal casing by the press-fit method (stuffing method), the inner diameter of the metal casing (the inner diameter of a portion housing the exhaust gas treatment body) is preferably slightly smaller than the outer diameter of the wound body.

Through these steps, the wound body obtained by wrapping the holding sealing material around the exhaust gas treatment body can be disposed in the exhaust gas purification apparatus.

The following matters are disclosed in the present specification.

Disclosure (1) relates to a mat material including a stacked mat, the stacked mat including an oriented layer including inorganic fibers that are oriented in the same direction and a random layer including inorganic fibers that are randomly oriented,
wherein the stacked mat contains a binder.

Disclosure (2) relates to the mat material according to Disclosure (1),
wherein the oriented layer and the random layer are alternately stacked in a thickness direction of the stacked mat, and each of two outermost layers of the stacked mat is the random layer.

Disclosure (3) relates to the mat material according to Disclosure (1) or (2),
wherein the stacked mat includes at least one of an organic binder or an inorganic binder.

Disclosure (4) relates to the mat material according to any one of Disclosures (1) to (3),
wherein, when the stacked mat is trisected in the thickness direction into a first surface portion, a middle portion, and a second surface portion, an outermost layer of the first surface portion is the random layer, and
a binder content of the first surface portion is higher than a binder content of the middle portion and higher than a binder content of the second surface portion.

Disclosure (5) relates to the mat material according to Disclosure (4),
wherein the binder contents satisfy the following relationships: $0.4 \leq \left(middle portion/first surface portion\right) ;$ $0.2 \leq \left(second surface portion/first surface portion\right) ;$ and $\left(second surface portion/middle portion\right) \leq 0.5 .$

Disclosure (6) relates to the mat material according to Disclosure (5),
wherein the binder contents further satisfy the following relationship: 0 < (second surface portion/middle portion).

Disclosure (7) relates to the mat material according to any one of Disclosures (1) to (6),
wherein 70% or more of the inorganic fibers in the oriented layer have an inclination of 60 to 90 degrees relative to a width direction of the mat material.

Disclosure (8) relates to the mat material according to any one of Disclosures (1) to (7),
wherein the mat material has a tensile strength at break of 200 kPa or more, as measured by a tensile test.

Disclosure (9) relates to the mat material according to any one of Disclosures (1) to (8),
wherein the mat material has an elongation at break of 3.5 mm or less, as measured by a tensile test.

Disclosure (10) relates to a holding sealing material including
the mat material according to any one of Disclosures (1) to (9),
the holding sealing material being for use in holding an exhaust gas treatment body in an exhaust gas purification apparatus.

### EXAMPLES

### (Example 1)

Papermaking mats including inorganic fibers and serving as an oriented layer and a random layer were produced by a papermaking method, stacked in the order of random layer/oriented layer/random layer/oriented layer/random layer, and collectively subjected to a needling treatment to produce a stacked mat.

A binder solution containing an organic binder was applied from one main surface (random layer) of the stacked mat, followed by drying to produce a mat material.

The stacked mat was trisected in the thickness direction to prepare a portion including the random layer to which the binder solution had been applied as a first surface portion, and a portion including a random layer located on the side opposite to the random layer to which the binder solution had been applied as a second surface portion. A portion between the first surface portion and the second surface portion was defined as a middle portion.

The binder contents were each determined from a change in weight before and after application of the binder solution.

Table 1 shows the binder content ratios, each of which is the ratio between the binder contents of two of the first surface portion, the middle portion, and the second surface portion.

In the oriented layer shown in the photograph in FIG. 4, 52% of the inorganic fibers had an angle θ ranging from 75 to 90 degrees. Further, 78% of the inorganic fibers had an inclination of 60 to 90 degrees relative to the width direction of the mat material.

In the random layer photographed in the same manner as the photograph shown in FIG. 4, 14% of the inorganic fibers had an angle θ ranging from 75 to 90 degrees. Further, 27% of the inorganic fibers had an inclination of 60 to 90 degrees relative to the width direction of the mat material.

### (Comparative Example 1)

The mat material (holding sealing material) of Example 1 of Patent Literature 1 was prepared.

The mat material of Example 1 of Patent Literature 1 is not a stacked mat and does not include both an oriented layer and a random layer therein together.

### (Tensile Test)

A sample was prepared by cutting the mat material to a length of 200 mm in the longitudinal direction of the mat material and a width of 50 mm in the width direction of the mat material.

The thickness of the sample was measured at three locations. Using a universal material testing machine equipped with chucks (gripping jigs) for tensile testing, the mat material was pulled in the longitudinal direction of the sample at a speed of 100 mm/min, with a gripping length of 40 mm at each side, and the load at break and the tensile distance at break were determined. 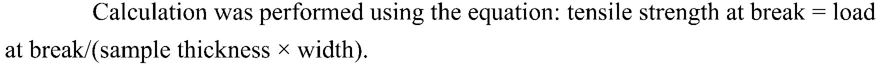 Calculation was performed using the equation: tensile strength at break = load at break/(sample thickness × width).

The tensile distance at break was defined as the elongation at break.

Table 1 shows the results.

**[Table 1]**

| | | Example 1 | Comparative Example 1 |
|---|---|---|---|
| Binder content ratio | Second surface portion/first surface portion | 0.2 | 0.2 |
| | Middle portion/first surface portion | 0.4 | 0.3 |
| | Second surface portion/middle portion | 0.5 | 0.6 |
| Tensile strength at break [kPa] | | 552 | 281 |
| Elongation at break [mm] | | 1.9 | 3.1 |

The results shown in Table 1 demonstrate that the mat material of Example 1 has high tensile strength.

### REFERENCE SIGNS LIST

10 mat material
20 stacked mat
23 first main surface of stacked mat
24 second main surface of stacked mat
25 first long side surface of stacked mat
26 second long side surface of stacked mat
27 first short side surface of stacked mat
28 second short side surface of stacked mat
30 oriented layer
31 inorganic fibers constituting oriented layer
40, 40a, 40b random layer
41 inorganic fibers constituting random layer
50 needle mark
51 rivet portion
100 exhaust gas purification apparatus
120 exhaust gas treatment body
120a, 120b exhaust gas inlet-side end
125 cell
126 cell wall
127 peripheral coat layer
128 plug material
130 metal casing
140 wound body

## Claims

1. A mat material comprising a stacked mat, the stacked mat comprising:
an oriented layer including inorganic fibers that are oriented in the same direction; and
a random layer including inorganic fibers that are randomly oriented,
wherein the stacked mat comprises a binder.

2. The mat material according to claim 1,
wherein the oriented layer and the random layer are alternately stacked in a thickness direction of the stacked mat, and each of two outermost layers of the stacked mat is the random layer.

3. The mat material according to claim 1 or 2,
wherein the binder is at least one of an organic binder or an inorganic binder.

4. The mat material according to any one of claims 1 to 3,
wherein, when the stacked mat is trisected in the thickness direction into a first surface portion, a middle portion, and a second surface portion, an outermost layer of the first surface portion is the random layer, and
a binder content of the first surface portion is higher than a binder content of the middle portion and higher than a binder content of the second surface portion.

5. The mat material according to claim 4,
wherein the binder contents satisfy the following relationships: $0.4 \leq \left(middle portion/first surface portion\right) ;$ $0.2 \leq \left(second surface portion/first surface portion\right) ;$ and $\left(second surface portion/middle portion\right) \leq 0.5 .$

6. The mat material according to claim 5,
wherein the binder contents further satisfy the following relationship: 0 < (second surface portion/middle portion).

7. The mat material according to any one of claims 1 to 6,
wherein 70% or more of the inorganic fibers in the oriented layer have an inclination of 60 to 90 degrees relative to a width direction of the mat material.

8. The mat material according to any one of claims 1 to 7,
wherein the mat material has a tensile strength at break of 200 kPa or more, as measured by a tensile test.

9. The mat material according to any one of claims 1 to 8,
wherein the mat material has an elongation at break of 3.5 mm or less, as measured by a tensile test.

10. A holding sealing material comprising
the mat material according to any one of claims 1 to 9,
the holding sealing material being for use in holding an exhaust gas treatment body in an exhaust gas purification apparatus.
